Europäisches Patentamt

European Patent Office

Office européen des brevets

(19)

○ Veröffentlichungsnummer: **0 321 692**
**A2**

# EUROPÄISCHE PATENTANMELDUNG

○ Anmeldenummer: 88118872.6

○ Int. Cl.⁴ **A23B 4/14 , A23B 4/12**

○ Anmeldetag: **11.11.88**

○ Priorität: **25.11.87 DE 3739989**

○ Veröffentlichungstag der Anmeldung:
**28.06.89 Patentblatt 89/26**

○ Benannte Vertragsstaaten:
**AT BE CH DE ES FR GB GR IT LI LU NL SE**

○ Anmelder: **Karl Müller & Co. KG**
**Klagenfurter Strasse 1-3**
**D-7000 Stuttgart 30(DE)**

○ Erfinder: **Hammes, Walter P.**
**Talstrasse 60 / 1**
**D-7024 Filderstadt-Bernhausen(DE)**

○ Vertreter: **Freiherr von Pechmann, Eckehart,**
**Dr. et al**
**Patentanwälte Wuesthoff- v.**
**Pechmann-Behrens-Goetz-v. Hellfeld**
**Schweigerstrasse 2**
**D-8000 München 90(DE)**

○ **Zur Stabilisierung von Fleischwaren geeignete Mikroorganismen.**

○ Bei der Pökelung von Fleischwaren werden verschiedene Mikroorganismen eingesetzt. Durch die vorliegende Erfindung sollen neue Mikroorganismen zur Verfügung gestellt werden, die in kurzer Zeit zu einem besonders reinen und angenehmen Aroma, zu einer einwandfreien Pökelfarbe und einer haltbaren Ware führen.

Die Mikroorganismen
Lactobacillus curvatus DSM 4265
Micrococcus varians DSM 4263
Debaryomyces hanseneii DSM 4260
führen zu den gewünschten Ergebnissen.
Stabilisierung von Fleischwaren.

EP 0 321 692 A2

## Zur Stabilisierung von Fleischwaren geeignete Mikroorganismen

Zur Fermentierung von rohen Pökelfleischwaren (Absäuerung) werden seit geraumer Zeit sogenannte Milchsäurebildner als Starterkulturen verwendet. Diese konventionellen Säurebildner entstammen häufig fremden Biotopen und sind im allgemeinen nach einer preiswerten Darstellungsmöglichkeit und reiner Milchsäurebildung ausgesucht.

Es ist auch bekannt, daß zur Fermentierung von rohen Pökelfleischwaren Mikrokokken verwendet werden. In aller Regel führt dieser Einsatz nach einer angemessenen Reifezeit zu einer typischen, erwünschten Aromatisierung des Lebensmittels. Die Reduktase- bzw. Katalaseaktivität dieser Stämme - insbesondere der Stämme "Micrococcus varians" sind jedoch in ihrer Wirkungsweise nicht optimal.

Ferner werden bereits Hefen und auch die Hefeart "Debaryomyces hansenii" als Starterkulturen bei rohen Pökelwaren zur Geschmacksverbesserung (Reifearoma) eingesetzt. Die gewünschte Aromatisierung ist im allgemeinen nach 4 bis 8 Tagen Fermentationszeit erkennbar. Diese bekannten Hefen können aber auch die Enzymaktivität anderer Kulturen, die mitverwendet werden, stören.

Aufgabe der Erfindung ist es, weitere Mikroorganismen zur Verfügung zu stellen, die den Fleischwaren bzw. dem Pökelgut ein möglichst reines Aroma ohne Geschmacksabweichungen verleihen, die bei der Fermentation mehr Sicherheit bringen und mit deren Hilfe die Umrötung, Farbhaltung und aromatisierende Wirkung stärker und in kürzerer Zeit erreicht werden.

Es hat sich nun überraschenderweise gezeigt, daß diese Aufgabe gelöst wird durch die Mikroorganismenstämme Lactobacillus curvatus (L-A-C) = DSM 4265, Micrococcus varians (M-I-C) = DSM 4263, Debaryomyces hansenii (H-E-B) = DSM 4260, die am 08. Oktober 1987 bei der deutschen Sammlung von Mikroorganismen (DSM) hinterlegt wurden und dort nach den Bestimmungen des Budapester Vertrages behandelt werden.

Diese drei Stämme sind hervorragend geeignet zur Herstellung von rohen Pökelfleischwaren (beispielsweise schnittfeste und streichfähige Rohwürste), aber auch allgemein für Fleischwaren und Lebensmittel, die fermentiert werden oder eine beschränkte Zeit roh bleiben. Mit Hilfe der erfindungsgemäßen Mikroorganismen kömmen verschiedene Fleischarten wie Rindfleisch, Schweinefleisch und Geflügel behandelt werden.

Aus hygienischen Gründen d. h. zur Vermeidung von pathogenen und toxikogenen Mikroorganismen, zur Bildung der stabilen Pökelfarbe und des Pökelaromas werden Fleischwaren Salpeter (meistens in Form von $KNO_3$) sowie Nitrit (in Form einer Mischung Kochsalz und $NaNO_2$) hinzugefügt. Bei der Pökelung - im Anfang der Reifung - wird der Salpeter teilweise biologisch zu Nitrit reduziert. Das freigewordene Nitrit dient schließlich zur stabilen, roten Pökelfarbbildung.

Aber auch bei Verwendung von Nitrit hat die Reduktase einen sichtbaren Vorteil. Denn bei diesem Verfahren oxydiert ein Teil des zugesetzten Nitrits zu Nitrat. Der so gebildete Salpeter muß wiederum reduziert werden.

Der Stamm Micrococcus varians (M-I-C) reduziert sehr schnell und ausreichend Nitrat, so daß eine gute Pökelfarbe mit Farbhaltung garantiert ist. Darüber hinaus werden die Restmengen von Nitrat und Nitrit in hygienisch vorteilhafter Weise in der fertigen Fleischware herabgesetzt. Diese Enzymaktivität ist auch bei pH-Werten um 5,0 sowie bei Temperaturen ab 8 °C gewährleistet. Mit Verwendung dieses Mikroorganismus kann die übliche Zugabe von Salpeter reduziert werden.

Rohes Fleisch sowie andere Lebensmittel und Lebensmittelrohstoffe mit hohem Wassergehalt enthalten biologisch bedingt (als Folge des Wachstums der Spontanflora) Peroxid ($H_2O_2$). Peroxid beeinträchtigt insbesondere bei rohen Pökelwaren die Pökelfarbbildung bzw. die Farbhaltung. Aber auch bei anderen Lebensmittel sind Verfärbungen durch Peroxid zu beobachten. Peroxid kann auch im hohen Maße Fett zersetzen und ranzig werden lassen.

Das von dem Micrococcus varians (M-I-C) erzeugte Katalase-Enzym baut Peroxid ab und schützt damit das Lebensmittel vor den zuvor beschriebenen Oxydationserscheinungen.

Im Vergleich zu anderen Mikrokokken verfügt der Stamm DSM 4263 über eine optimale Katalaseaktivität (auch bei Temperaturen ab 8 °C und pH-Werten um 5,0). Dieser Micrococcus-Stamm führt aufgrund seiner Lipaseaktivität zu der erwünschten Aromatisierung.

Eine erwünschtes Fermentationsaroma kann auch mit Hilfe des Stammes Debaryomyces hanseneii DSM 4260 (H-E-B) besonders kräftig und schnell (innerhalb von 24 bis 48 h) erreicht werden. Dabei wurde auch festgestellt, daß diese Hefe ähnlich wie Ascorbinsäure die Umrötung verbessert bzw. die Lebensmittelfarbe vorteilhaft stabilisiert.

Der Stamm Lactobacillus curvatus DSM 4265 (L-A-C) führt zu einer kontrollierten Milchsäurebildung mit geeigneten Zuckerstoffen, ohne daß die konkurrierenden Säurebildner in erheblichen Maße mit anwachsen und ohne daß eine "fremde" Geschmacksabweichung in Lebensmitteln auftritt.

Die oben beschriebenen Mikroorganismenstämme wurden nach den folgenden Kriterien untersucht und erwiesen sich in jeder Hinsicht als für die vorgesehenen Zwecke geeignet:

1. Keinerlei Pathogenitätsmerkmale;

2. Schnelle, reine Aromabildung;

3. (Bei Lactobacillus curvatus) reine Milchsäurebildung; konkurrenzstark, d.h. in der Rohpökelware soll während des Fermentationsprozesses die spontane Flora nicht wesentlich anwachsen;

4. (Bei Debaryomyces hanseneii) Kombinationsmöglichkeit mit Milchsäure-bildenden bzw. Nitrat-reduzierenden Kulturen;

5. (Bei Micrococcus varians) eine Reduktaseaktivität, die niedrigste Restmengen an Nitrat und Nitrit im Lebensmittel garantiert;

eine ausreichende Katalaseaktivität, die das Lebensmittel vor Oxydationserscheinungen schützt; die Aktivität des Stammes ist in einem sehr breiten Temperaturbereich und bei pH-Werten um 5,0 gewährleistet;

Die Erfindung wird durch die folgenden Verwendungsbeispiele näher erläutert:

Verwendungsbeispiel 1

Lactobacillus curvatus DSM 4265 bei der Herstellung von schnittfester Rohwurst (Typ Salami)

| Materialzusammenstellung: | | |
|---|---|---|
| | 30 kg | Rindfleisch, grob entsehnt, sichtbarer Fettanteil 5 % |
| | 30 kg | Schweinefleisch, sehnenfrei, sichtbarer Fettanteil 5 % |
| | 20 kg | Schweinebauch, sichtbarer Fettanteil 60 % |
| | 20 kg | Rückenspeck, ohne Schwarte |
| = | 100 kg | Material |

Zusätze je 1 kg Material:

28 g Nitritpökelsalz

5 g Glucose

2 g Pfeffer weiß, gemahlen

$5 \times 10^9$ Lactobacillus curvatus DSM 4265 gefriergetrocknet

Material vorbereitung:

1. Die Materialien jeweils in Stücke schneiden.

2. Das Rindfleisch, den Schweinebauch und den Speck hart gefrieren.

3. Das Schweinefleisch gut durchkühlen und unmittelbar vor der Verarbeitung durch die 8 mm-Scheibe wolfen.

Herstellung:

1. Die gefriergetrocknete Starterkultur "Lactobacillus curvatus DSM 4265" zur gleichmäßigen Verteilung in etwas Leitungswasser (ca. 200 g) einrühren.

2. Zunächst das Rindfleisch bei Zugabe der Starterkultur im Kutter so lange vorzerkleinern, bis die Masse etwas bindet.

3. Danach die Glucose sowie den Pfeffer hinzufügen und

4. die Masse zur guten Vermengung einige Runden im Kutter weiter laufen lassen.

5. Anschließend Speck und den Schweinebauch zusetzen und

6. weiterkuttern, bis der Speck eine Korngröße von 6-8 mm aufweist.

7. Nunmehr das vorgewolfte Schweinefleisch mit dem Nitritpökelsalz hinzukuttern.

8. Die Gesamtmasse so lange weiterkuttern, bis das Fett eine Körnung von etwa 2 mm aufweist und die Wurstmasse Bindung zeigt.

9. Gefüllt wird die fertige Wurstmasse (Temperatur etwa minus 2°C) in wasserdurchlässige Hautfaserdärme. Kaliber 70 mm.

Reifung in der Klimakammer:

1. Zunächst bei den Würsten mit 70 % relativer Luftfeuchtigkeit und 24°C das äußere Schwitzwasser für 6 Stunden wegtrocknen.

2. Danach weitere 18 Stunden bei 90-92 % rel. Luftfeuchte und 24°C klimatisieren.

3. Klimatisierung am 2. Tag

   a) für 12 Stunden 90 % relative Luftfeuchtigkeit und 22°C.

   b) Für weitere 12 Stunden 88 % relative Luftfeuchtigkeit und 20°C. Dabei etwas Rauch zugeben und Umluftgeschwindigkeit stundenweise erhöhen.

4. Klimatisierung vom 3. bis zum 7. Tag:

Stufenweise Temperatur und relative Luftfeuchte auf Nachreifebedingungen zurücknehmen.

5. Nachreifebedingungen und Trocknung: 14 -16°C, 76-78 % relative Luftfeuchtigkeit.

Ergebnis:

Entsprechend dem Erfindungsanspruch "einer dominierenden" Starterkultur wurde 10 Tage nach Beginn der Reifung folgende mikrobiologische Untersuchung aufgezeichnet:

| Gesamt | Keimzahl je Gramm $9 \times 10^8$ |
|---|---|
| Lactobacillus curvatus DSM 4265 | $9 \times 10^8$ |
| Säurebildner | $8 \times 10^6$ |
| Coliforme Keime | $< 10^2$ |
| Aerobe Sporenbildner | $< 10^2$ |
| Enterobacteriaceen | $< 10^2$ |
| Proteolyten | $< 10^2$ |

Anmerkung:

Bei üblichen milchsäurebildenen Starterkulturen wachsen die zugesetzten Mikroorgansimen während der Säuerung der Wurst in den ersten 2-4 Tagen der Reifung ebenfalls auf Zahlen zwischen $10^8$ und $10^9$ an. Allerdings wächst die spontane Säurebildnerflora entsprechend der Anfangskeimzahl mit. Nach der Säuerung sterben die Starter wieder ab, weil sie an Fleisch nicht adaptiert sind. Dagegen lebt die spontane säurebildende Flora so lange weiter, so lange es die Wasseraktivität des Mediums erlaubt, und kann damit in der Folge zur Qualitätseinbußen in Farbe, Geschmack und Konsistenz der Fertigware führen.

Verwendungsbeispiel 2

Micrococcus varians DSM 4263 bei der Herstellung von Salami (schnittfeste Rohwurst)

| Materialzusammenstellung: | | |
|---|---|---|
| | 30 kg | Rindfleisch, grob, entsehnt, sichtbarer Fettanteil 5 % |
| | 30 kg | Schweinefleisch, sehnenfrei, sichtbarer Fettanteil 5 % |
| | 20 kg | Schweinebauch, sichtbarer Fettanteil 60 % |
| | 20 kg | Rückenspeck, ohne Schwarte |
| = | 100 kg | |

Zusätze je 1 kg Material:

28,0 g Kochsalz

0,3 g Kaliumnitrat

4,0 g Glucose

2,0 g Pfeffer weiß, gemahlen

$5 \times 10^9$ Pediococcus acidilactici, gefriergetrocknet (milchsäurebildende Starterkultur in handelsüblicher Qualität)

$5 \times 10^9$ Micrococcus varians DSM 4263 gefriergetrocknet

Materialvorbereitung:

1. Die Materialien jeweils in Stücke schneiden.

2. Das Rindfleisch, den Schweinebauch und den Speck hart gefrieren.

3. Das Schweinefleisch gut durchkühlen und unmittelbar vor der Verarbeitung durch die 8 mm-Scheibe wolfen.

Herstellung:

1. Die gefriergetrockneten Starterkulturen Pediococcus acidilactici und Micrococcus varians zur gleichmäßigen Verteilung in etwas Leitungswasser (ca. 200 g) einrühren.

2. Zunächst das Rindfleisch bei Zugabe der Starterkulturen im Kutter so lange vorzerkleinern, bis die Masse etwas bindet.

3. Danach das Kaliumnitrat, die Glucose sowie den Pfeffer hinzufügen und

4. die Masse zur guten Vermengung einige Runden im Kutter weiter laufen lassen.

5. Anschließend den Speck und den Schweinebauch zusetzen und

6. weiterkuttern, bis der Speck eine Korngröße von 6 bis 8 mm aufweist.

7. Nunmehr das vorgewolfte Schweinefleisch mit dem Kochsalz hinzukuttern.

8. Die Gesamtmasse so lange weiterkuttern, bis das Fett eine Körnung von etwa 2 mm aufweist und die Wurstmasse Bindung zeigt.

9. Gefüllt wird die fertige Wurstmasse (Temperatur etwa minus 2° C) in wasserdurchlässige Hautfaserdärme, Kaliber 70 mm.

Reifung in der Klimakammer

1. Zunächst bei den Würsten mit 70 % relativer Luftfeuchtigkeit und etwa 18° C Temperatur für 6 Stunden das äußere Schwitzwasser wegtrocknen.

2. Danach relative Luftfeuchtigkeit auf 94 % für weitere 18 Stunden erhöhen.

3. Nach insgesamt 24 Stunden die Temperatur bei gleichbleibender Feuchtigkeit auf 22° erhöhen. Diese Klimabedingungen bei geringer Umluft weitere 24 Stunden beibehalten.

4. Am 3. Tag bei leichter Rauchzugabe Temperatur auf 20° C und die relative Luftfeuchte auf 90-92 % einstellen.

5. Am 4. Tag: relative Luftfeuchte 88-90 %, Temperatur 18° C.

6. Am 5. Tag: relative Luftfeuchte 86-88 %, Temperatur 18° C. Würste fertig rauchen.

7. Am 6. Tag: relative Luftfeuchte 84-86 %, Temperaut 18° C.

8. Am 7. Tag: relative Luftfeuchte 82-84 %, Temperatur 16° C.

9. Ab dem 8. Tag bei Nachreifebedingungen trocknen: Temperatur 14-16° C. relative Luftfeuchte ca. 78 %.

Ergebnisse:

1. Durch die gefundene Katalaseaktivität des Stammes "Micrococcus varians DSM 4263" weist die Salami bereits nach 5 - 7 Tagen Reifung neben einer hervorragenden Umrötung eine "haltbare Pökelfarbe" auch im Anschnitt auf.

2. Die für Mikrokokken hervorragende Reduktase (Abbau von Salpeter) zeigt die folgende chemische Analyse 7 - Tage nach Reifungsbeginn -: (bei einem Ausgangswert von 300 mg Kaliumnitrat je 1 kg Wurstmasse)

= 36 mg Nitrit und 76 mg Nitrat je 1 kg Wurstmasse

Berechnet als Gesamtnitrat:

= 129 mg je 1 kg Wurstmasse.

Verwendungsbeispiel 3

Debaryomyces hansenii DSM 4260 bei der Herstellung von grober, streichfähiger Mettwurst (frische Rohwurst

| Materialzusammenstellung: | | |
|---|---|---|
| | 70 kg | Schweinefleischabschnitte, ohne Sehnen und ohne Schwarten, mit einem sichtbaren Fettanteil von ca. 30 % |
| | 30 kg | Schweinebauch, ohne Schwarten, mit einem sichtbaren Fettanteil von 60 % |
| = | 100 kg | Material |

Zusätze je 1 kg Material:

26 g Nitritpökelsalz
2.5 g Glucose
1 g Pfeffer weiß, gemahlen
$5 \times 10^9$ Pedicocccus pentosaceus, gefriergetrocknet (milchsäurebildende Starterkultur in handelsüblicher Qualität)
$2 \times 10^9$ Debaryomyces hansenii DSM 4260, konzentriert und gefroren

Materialvorbehandlung:

Das gesamte Material in Stücke schneiden und kühlen.

Herstellung:

1. Die gefriergetrocknete Starterkultur Pedococcus pentosaceus zusammen mit der gefrorenen Hefe Debaryomyces hansenii DSM 4260 in etwas Leitungswasser (ca. 200 g) zur besseren Verteilung einrühren.

2. Alle Zusätze mit dem grobstückigem Fleischmaterial gut vermengen.

3. Danach die gesamte Masse durch die 3 mm-Scheibe (einfacher Schneidsatz) wolfen.

4. Sofort nach dem Wolfen die Wurstmasse in wasserdurchlässige Kunst-Kranzdärme. Kaliber 43 mm, füllen.

Klimatisierung:

Für 24-36 Stunden die Würste bei 24°C, einer relativen Luftfeuchtigkeit von ca. 80 % und bei schwacher Luftbewegung umröten lassen und reifen. Vor Ende der Klimatisierung noch kalt rauchen. Der End-pH-Wert der fertigen Wurst liegt zwischen pH 5.4 und pH 5.2.

Ergebnisse:

1. Die Fermantation (Säuerung) der Wurstmasse verläuft einwandfrei zwischen 24-36 Stunden ab.
2. Die Umrötung der Würste mit zugesetzter Hefe verläuft im Vergleich schneller.
3. Die Farbgebung der mit Hefe hergestellten groben Streichmettwurst ist stabil.
4. Sofort nach der pH-Wertabsenkung innerhalb von 24-36 Stunden ist bei der Wurst mit Hefe ein ausgeprägtes Reifearoma erkennbar. Die Vergleichswürste schmecken dagegen "flach".

**Ansprüche**

1. Zur Stabilisierung von Fleischwaren geeignete Mikroorganismen
Lactobacillus curvatus DSM 4265
Micrococcus varians DSM 4263
Debaryomyces hanseneii DSM 4260.
2. Vewendung der Mikroorganismen nach Anspruch 1. zur Haltbarmachung, insbesondere beim Pökeln, von Fleischwaren.